(19)

**Europäisches Patentamt**
**European Patent Office**
**Office européen des brevets**

(11) **EP 2 695 104 B1**

(12) **EUROPEAN PATENT SPECIFICATION**

(45) Date of publication and mention
of the grant of the patent:
**27.07.2016 Bulletin 2016/30**

(51) Int Cl.:
***G06K 9/00*** *(2006.01)*      ***G06T 5/00*** *(2006.01)*

(21) Application number: **12716691.6**

(86) International application number:
**PCT/LV2012/000005**

(22) Date of filing: **30.03.2012**

(87) International publication number:
**WO 2013/147574 (03.10.2013 Gazette 2013/40)**

(54) **BIOMETRIC AUTHENTICATION APPARATUS AND BIOMETRIC AUTHENTICATION METHOD**

BIOMETRISCHE AUTHENTIFIZIERUNGSVORRICHTUNG UND BIOMETRISCHES
AUTHENTIFIZIERUNGSVERFAHREN

APPAREIL D'AUTHENTIFICATION BIOMÉTRIQUE ET PROCÉDÉ D'AUTHENTIFICATION
BIOMÉTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.02.2014 Bulletin 2014/07**

(73) Proprietor: **Institute of Electronics and Computer
Science
1006 Riga (LV)**

(72) Inventors:
- **GREITANS, Modris**
  **LV-1006 Riga (LV)**
- **PUDZS, Mihails**
  **LV-1006 Riga (LV)**
- **FUKSIS, Rihards**
  **LV-1006 Riga (LV)**
- **RUSKULS, Rinalds**
  **LV-1006 Riga (LV)**

(56) References cited:
- **M. PUDZS; M. GREITANS; R. FUKSIS: "Complex
  2D Matched Filtering Without Halo Artifacts",
  18TH INTERNATIONAL CONFERENCE ON
  SYSTEMS, SIGNALS AND IMAGE PROCESSING,
  16 June 2011 (2011-06-16), pages 109-112,
  XP002684284, cited in the application**
- **M. GREITANS ET AL.: "Palm Vein Biometrics
  Based on Infrared Imaging and Complex Matched
  Filtering", PROCEEDINGS OF THE 12TH ACM
  WORKSHOP ON MULTIMEDIA AND SECURITY,
  [Online] 9 September 2010 (2010-09-09), - 10
  September 2010 (2010-09-10), pages 101-106,
  XP002684291, Retrieved from the Internet:
  URL:http://dl.acm.org/citation.cfm?id=1854250>
  [retrieved on 2012-09-28]**
- **MODRIS GREITANS ET AL: "Object analysis in
  images using complex 2D matched filters",
  EUROCON 2009, EUROCON '09. IEEE, IEEE,
  PISCATAWAY, NJ, USA, 18 May 2009
  (2009-05-18), pages 1392-1397, XP031492040,
  ISBN: 978-1-4244-3860-0**
- **FUKSIS R ET AL: "Processing of Palm Print and
  Blood Vessel Images for Multimodal Biometrics",
  BIOMETRICS AND ID MANAGEMENT : COST
  2101 INTERNATIONAL WORKSHOP, BIOID 2011,
  BRANDENBURG (HAVEL), GERMANY, MARCH
  8-10, 2011 ; PROCEEDINGS; [LECTURE NOTES
  IN COMPUTER SCIENCE ; 6583], SPRINGER,
  BERLIN, DE, vol. 6583, 8 March 2011 (2011-03-08),
  pages 238-249, XP002673606, ISBN:
  978-3-642-19529-7**
- **LEILA MIRMOHAMADSADEGHI ET AL: "Palm
  vein recognition with Local Binary Patterns and
  Local Derivative Patterns", BIOMETRICS (IJCB),
  2011 INTERNATIONAL JOINT CONFERENCE ON,
  IEEE, 11 October 2011 (2011-10-11), pages 1-6,
  XP032081642, DOI: 10.1109/IJCB.2011.6117804
  ISBN: 978-1-4577-1358-3**

**Description**

Technical field

This invention relates to a biometric authentication apparatus and biometric authentication method, which utilize biometric characteristics of a hand, especially a palm of a hand, to authorize individuals, and in particular relates to a biometric authentication apparatus and method, which are suitable for improving the speed of verification by reducing the time to process the biometric characteristics of a palm.

Background art

European Patent No. 1 835 443 describes a biometric authentication method and biometric authentication apparatus, comprising a detection device, a control unit and a biometric information database file. A biometric authentication method comprising the steps of detecting biometric information, extracting it, calculating the degree of similarity between a biometric characteristic data and verifying thereof.
US patent No. US 8,000,503 proposes a biometric authentication system, registration method, and a program for the same. The biometric authentication system comprises an image capture unit, a storage unit and a processing unit. Similar data processing device, image matching method, program and image matching system is described in United States patent application US 2012/0026354 A1.
A methods for processing captured images are described in non-patent literature:

- Chaudhuri, S.; Chatterjee, S.; Katz, N.; Nelson, M.; Goldbaum, M.; , "Detection of blood vessels in retinal images using two-dimensional matched filters," Medical Imaging, IEEE Transactions, vol.8, no.3, pp.263-269, Sep 1989, [1], and
- M. Pudzs, M. Greitans, R. Fuksis. "Complex 2D Matched Filtering Without Halo Artifacts", 18th International Conference on Systems, Signals and Image Processing, IWSSIP 2011, Sarajevo, Bosnia and Herzegovina, June 16-18, 2011, pp. 109-112 [2].

Summary of the invention

The main problem with a biometric authentication apparatus is integration of all required functionality into least number of components thus reducing the size of the biometric system, as well as the production cost and power consumption. Therefore, it is necessary to develop a biometric authentication apparatus that requires least number of processing units and a method that does not require additional resources.
The aim of the invention is reached by designing biometric authentication apparatus, which detects biometric characteristic data of a palm and performs individual authentication. Apparatus comprises an image capturing device, which captures images of a hand, especially images of a palm, a processing device for processing each captured image, which acquires the set of vectors, that incorporates the biometric data of a palm, and a data storage device, that stores plurality of said registered sets of vectors.
The processing device comprises a unit, which performs a two dimensional (2D) sparse matched filtering of the blurred input image. Said unit simulates 2D matched filtering of the input image with four masks, and obtains the sparse matched filtering values for each pixel. The processing device also comprises a Halo artifact removal unit that removes Halo artifact by setting to zero any negative said sparse matched filtering values as described in [2]. Next part of the processing device is a vector-obtaining unit that assigns an angle to each filtered pixel value to obtain complex reactions, which are summed together to acquire cumulative vector value. Said assigned angle value could be a 0°, 90°, 180° or 270°. Optionally an angle of each cumulative vector can be decreased by half to obtain matching intensity vectors. A part of the processed image is divided in a grid of N rows and M columns (NxM) for the most significant vector extraction from the each cell of the grid. As a result a set of most significant vectors for captured image is generated which can be matched with set of vectors registered in system and stored in the data storage device. Matching of vectors is performed in a registration-processing unit embedded in the processing device. It compares obtained set of vectors against either one or multiple set of vectors stored in a data storage device. The data storage device stores plurality of sets of vectors characterizing biometric data of a hand, especially a palm of the hand.
In one embodiment the apparatus further comprises a digital blur filter that blurs the image captured by the image-capturing device. In the result image is blurred before it reaches the processing device.
In other embodiment of the invention the apparatus further comprises a blurring lens for optical blurring of the scene before it is captured by the image-capturing device. The blurring lens can substitute the blur filter or vice versa. The use of such a blurring means to blur the image intentionally speaks against the logic in biometric authentication systems. But it was surprisingly found that such intentional blurring of the image gives following advantages: each image can be processed performing fewer operations, because each matched filter, that processes the input image, can be substituted by the sparse matched filter (a *digital* matched filter with sparse *matrix as its* mask, having only few individual non-zero pixels), which processes the blurred input image and requires fewer processing resources than in [2], or other state of the art technologies. *If blurring is performed using Gaussian filter, the intensity of blurring - Sigma, which defines the shape of the used Gaussian function - has to he at least 3 \*SIZE/7, where SIZE is the width or height of a square spare matched filter kernel. It must be noted that the blurring intensity used here is, therefore, greater than usually used for image denoising.*

It should be noted that the image-capturing device captures images of a hand, especially images of a palm, either in both, either in only one of the visible light or near infrared light spectrums.

A biometric authentication method of detecting biometric characteristic data and performing individual authentication comprises plurality of steps. The first step is capturing an image of a hand, especially image of a palm, with an image-capturing device. According to the one embodiment captured image is blurred by means of a digital blur filter. According to the other embodiment blurring of the scene by means of blurring lens is performed before the image capturing. Next steps are the same for both embodiments. The next step is sparse matched filtering of a blurred image, using the combined *sparse* kernel that simulates the bank of the four matched filters. Four sparse matched filtering values are acquired for each output pixel. Afterwards Halo artifact removal is performed by setting to zero any of the obtained negative values. Each filtered pixel value is assigned with an angle to acquire a vector value. Summing of all four vector values in each pixel from the processed image is performed to acquire one cumulative vector value for each pixel. Then plurality of either cumulative, either matching intensity vectors is processed through implemented NxM grid to acquire a set of vectors that consists of only most significant vectors. Said vector obtaining unit comprises an NxM grid, that divides the captured image in predetermined cells to generate most significant vector or vectors from each cell. Said set of vectors represents the biometric data of a hand, especially of a palm. The final step includes comparing said set of vectors of the captured image to a set of vectors stored in a data storage device and verifying said comparison results.

Invention is characterized in that the image is intentionally blurred before the image processing. Usually in image processing it is desirable to acquire a sharp captured image. Blurring of the image usually is avoided *or performed for image clenoising*. In said invention blurring of captured image is performed on purpose. It can be performed using Gaussian blur filter. Matched filtering of the input image is replaced by sparse matched filtering of the blurred input image, reducing overall computation costs. Apparatus uses a combined sparse matched filter (SMF) that simulates the bank of four MFs. Each SMF is a *digital* matched filter with sparse *matrix as its* mask consisting only of individual non-zero pixels. Pixels are arranged in a predetermined manner.

Brief description of drawings

Fig. 1 is a block diagram illustrating the configuration of a biometric authentication apparatus 1 exploiting blurring lens 10.
Fig. 2 is a block diagram illustrating the configuration of a biometric authentication apparatus 1 exploiting blur filter 11.
Fig. 3 is a flow chart illustrating a flow of a process performed by a biometric authentication apparatus 1.
Fig. 4 illustrates pixel positions for kernel of combined sparse matched filter for arbitrary d value, wherein d is a kernel scaling value.

Detailed description of the invention

Next, with reference to drawings, the present invention will be described in detail.

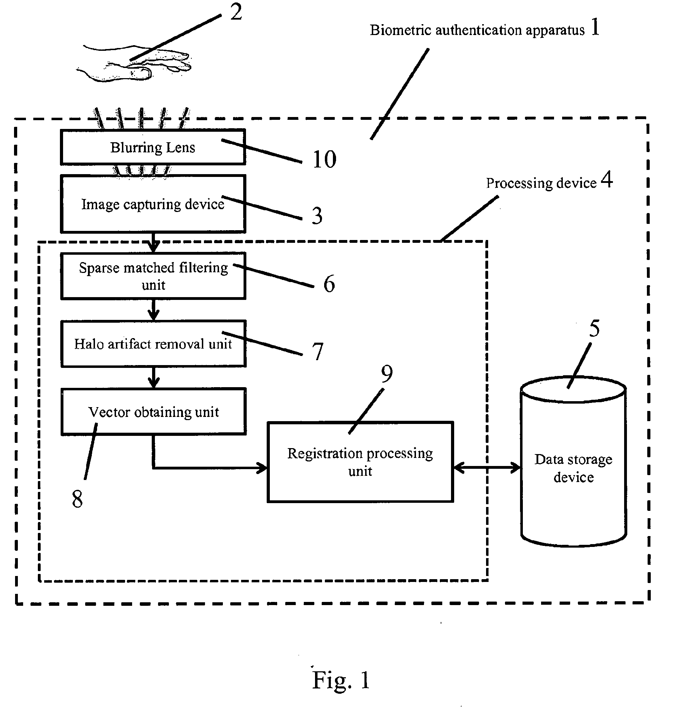

Present invention comprises a biometric authentication apparatus 1, which detects biometric characteristic data of a palm 2 and performs individual authentication. The outline of the biometric authentication apparatus 1 according to the first embodiment will be described with the reference to Fig. 1. Said biometric authentication apparatus 1 comprises an image capturing device 3 that captures images of a hand, especially images of a palm 2, a processing device 4 for processing each captured image, and a data storage device 5, that stores plurality of coded images as sets of vectors characterizing biometric data of a palm 2. The processing device 4 comprises a sparse matched filtering unit 6, a Halo artifact removal unit 7, a vector obtaining unit 8 and a registration-processing unit 9. The biometric authentication apparatus 1 in the first embodiment is characterized in that it comprises blurring lens 10 that blurs the scene before the image is being captured by the image-capturing device 3.

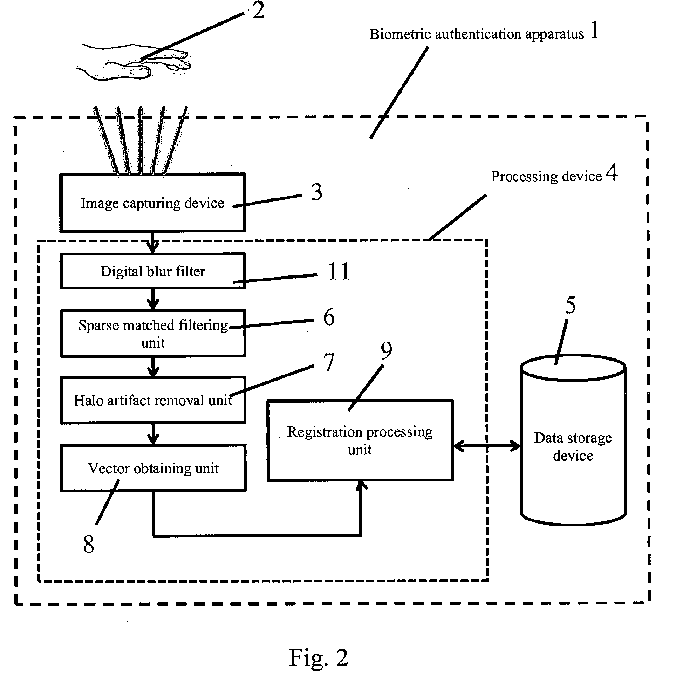

The second embodiment as shown in Fig. 2 comprises all the features of the first embodiment except it does not have the blurring lens 10. Instead, the biometric authentication apparatus 1 between the image capturing device 3 and the sparse matched filtering unit 6 comprises a digital blur filter 11. The digital blur filter 11 performs blurring of captured image so that the image is fed to the sparse matched filtering unit 6 blurred.

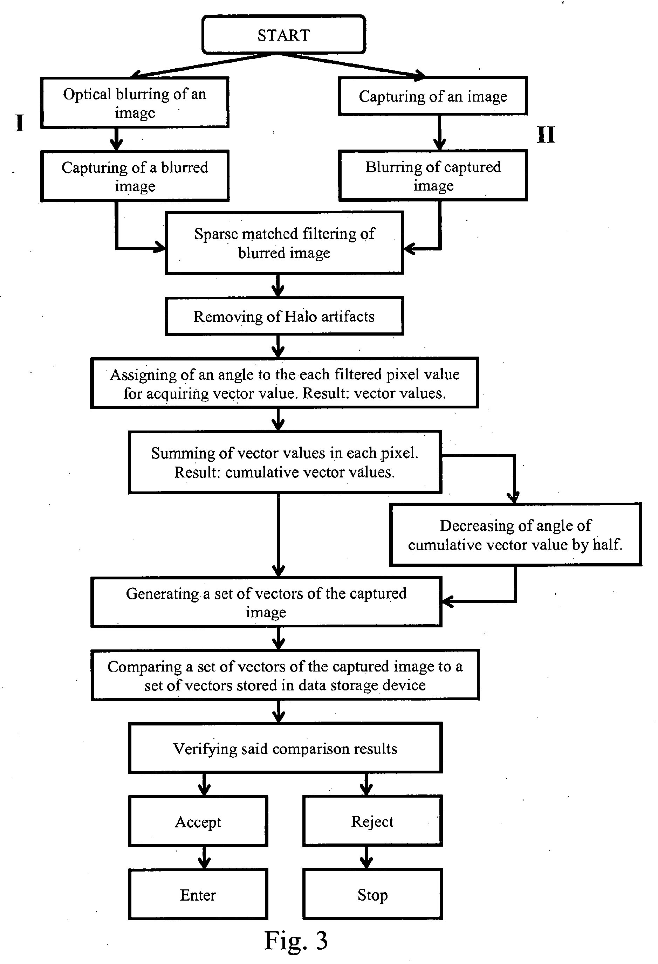

A biometric authentication method of detecting biometric characteristic data and performing individual authentication performed by biometric authentication apparatus 1 will be described with the reference to Fig. 3.

Individual authentication starts with user putting his/her palm 2 of a hand in front of the image-capturing device 3. The next step includes capturing image of the palm 2 both in visible light spectrum and in near infrared light spectrum or only in one of the said light spectrums. The first embodiment of the method includes the steps of section I as shown in Fig. 3, which comprises blurring of the scene by means of a blurring lens 10 and capturing the blurred image by image capturing device 3. The steps of section II are performed by the biometric authentication apparatus 1 described above in the second embodiment that comprises the digital blur filter 11, that blurs the image, captured by an image capturing device 3. As a result, in both embodiments at least one blurred image of a hand, especially a palm 2 of a hand in one or both light spectrums is acquired.

Blurred image is filtered using combined SMF 6. After filtering, any negative value obtained for any pixel is set to zero. This step is called Halo artifact removal [2]. Said step is performed in the Halo artifact removal unit 7. The next step is assigning of an angle for every sparse matched filtering value, obtained in each pixel of the said captured image.

For each pixel of a captured image a plurality of vectors are obtained. Vectors are summed to acquire a cumulative vector value in each pixel of a captured image. Using NxM grid a set of most significant vectors is generated for describing images captured in both or in either of the visible or near infrared light spectrum. Optionally, before the generation of set of vectors an angle of the each cumulative vector value can be decreased by half, obtaining matching intensity vector. Said step is performed in the vector-obtaining unit 8. Finally said set of vectors of the captured image is compared to a set of vectors stored in a data storage device 5. Said step is performed in the registration-processing unit 9. After verifying said comparison results user is either accepted, either rejected by the biometric authentication apparatus 1.

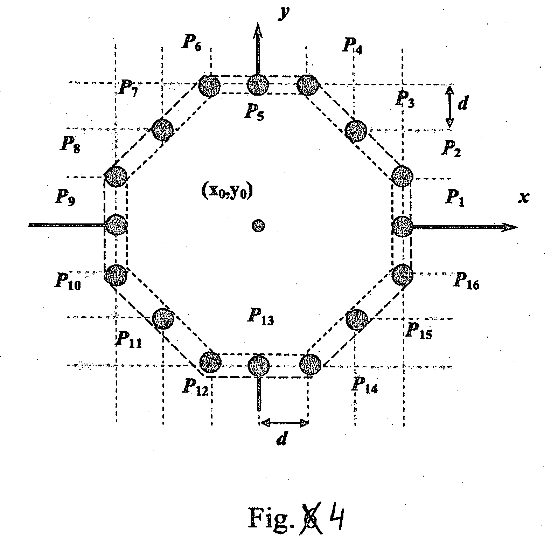

Combined sparse matched kernel is combined of four sparse matched filter masks. Given kernel consists of 16 pixels $P_n$, where n denotes index of a pixel, and is 1 to 16. Detailed view of pixel configuration for combined sparse matched filter is shown in Fig. 4. Traditional matched filtering technique is replaced by sparse matched filtering. Less pixels should be read therefore significantly reducing the computation costs.

For an observed pixel with coordinates $(x_0,y_0)$ using the pixels $P_1...P_{16}$ read from its neighbourhood in the blurred input image, as shown in Fig. 4 the output values are calculated using four following equations (1-4):

$$s_0(x_0,y_0; 0°) = Z \cdot C_{NH} \cdot [2 \cdot (P_1 + P_9) - P_{16} - P_2 - P_8 - P_{10}], \qquad (1)$$

$$s_1(x_0,y_0; 45°) = Z \cdot C_{NH} \cdot [2 \cdot (P_3 + P_{11}) - P_2 - P_4 - P_{10} - P_{12}], \qquad (2)$$

$$s_2(x_0,y_0; 90°) = Z \cdot C_{NH} \cdot [2 \cdot (P_5 + P_{13}) - P_4 - P_6 - P_{12} - P_{14}], \qquad (3)$$

$$s_3(x_0,y_0; 135°) = Z \cdot C_{NH} \cdot [2 \cdot (P_{+7} + P_{9/5}) - P_6 - P_8 - P_{14} - P_{16}], \qquad (4)$$

where $s_n$ is the output value for each of the simulated four matched filters, Z is value that specifies the intensity of detectable line-like object (+1 - brighter than the background, -1 - darker that the background), $C_{NH}$ is a mask coefficient. $s_0$ is the sparse matched filtering value where the angle for simulated matched filter mask is 0°. Accordingly, $s_1$ is the sparse matched filtering value where the angle for simulated matched filter mask is 45°, $s_2$ is the sparse matched filtering value where the angle for simulated matched filter mask is 90° and $s_3$ is the sparse matched filtering value where the angle for simulated matched filter mask is 135°.

The ramp function (6) is applied to the sparse matched filtering values for Halo artifact removal, which can be described by the following equation (5):

$$c_n(x_0, y_0; \varphi_n) = R(s_n(x_0, y_0; \varphi_n)), n = 0, 1, 2, 3, \qquad (5)$$

where

$$R(x) = \begin{cases} x, x \geq 0 \\ 0, x < 0 \end{cases} \qquad (6)$$

The angles are assigned to the results $c_n$ to obtain complex reactions or four vector values in each pixel. Said step can be described by the following equations (7-10):

$$\bar{c}_0(x_0, y_0; 0°) = c_0(x_0, y_0; 0°), \qquad (7)$$

$$\bar{c}_1(x_0, y_0; 45°) = c_1(x_0, y_0; 45°) \cdot i, \qquad (8)$$

$$\bar{c}_2(x_0, y_0; 90°) = -c_2(x_0, y_0; 90°), \qquad (9)$$

$$\bar{c}_3(x_0, y_0; 135°) = -c_3(x_0, y_0; 135°) \cdot i, \qquad (10)$$

where i is an imaginary unit.

Said four vector values are summed together to obtain a cumulative vector value $\bar{c}$ $(x_0, y_0)$ in observed pixel with coordinates $(x_0, y_0)$. This cycle is repeated to acquire the cumulative vector value for every output pixel within the range of the captured image. NxM grid is applied to generate most significant vectors resulting in a set of vectors that describes said biometric data of a hand, especially of a palm.

Said combined SMF kernel requires only 16 pixels to be processed to acquire one cumulative vector $\vec{c}$ $(x_0, y_0)$. Wherein the blurred input image should be processed only once. If four matched filter masks are used a total of *filter mask WIDTH times HEIGHT* pixels needs to be processed to acquire one cumulative vector, and the image must be processed 4 times, that increases overall computation complexity and processing time.

*If blurring is performed using Gaussian filter, the intensity of blurring - Sigma, which defines the shape of the used Gaussian function - has to be at least 3\*d, where d is the minimum distance between pixels of combined sparse matched filter kernel which is shown in Fig. 4. It must be noted that the blurring intensity used here is, therefore, grater than usually used for image denoising.*

It should be understood by those skilled in the art that the structure and details of the present invention may be changed in various manners without departing from the scope of the present invention.

## Claims

1. A biometric authentication apparatus, which detects biometric characteristic data of a palm and performs individual authentication, comprising

    - an image capturing device (3), that captures images of a hand, especially images of a palm,
    - *an image blurring device that, defending on the embodiment, consists of only one*

        -- *either a digital blur filter (11), that blurs the image captured by the image-capturing device (3) before the image reaches the sparse matched-filtering unit (6),*
        -- *either a blurring lens (10) for optical blurring of the scene, before it is captured by an image capturing device (3) before the image reaches the sparse matched-filtering unit (6),*

    - a processing device (4) for processing each captured image comprises:

        -- a sparse matched-filtering unit (6), that performs sparse matched filtering of the image by simulating four matched filters *using only a single combined sparse matched filtering kernel*, in the result a sparse matched filtering values are obtained for each pixel,

-- a Halo artifact removal unit (7), that sets to zero any negative sparse matched filtering value acquired in previous step,

-- a vector obtaining unit (8), that assigns angles to each of the four values, acquired in each filtered pixel for obtaining four complex responses in each pixel, where said four complex responses are summed together to acquire one cumulative vector value for each pixel, wherein said vector obtaining unit (8) comprises a NxM grid, that divides the captured image in predetermined cells to generate from each cell the most significant vector or multiple vectors and acquire a set of vectors,

-- a registration processing unit (9), that compares obtained set of vectors against set of vectors stored in a data storage device (5),

as a result a set of vectors for captured image is generated which can be matched with set of vectors stored in the data storage device (5),

- a data storage device (5), that stores plurality of sets of vectors characterizing biometric characteristic data of a hand, especially of a palm (2).

2. The biometric authentication apparatus (1) according to Claim 1, wherein sparse matched-filtering unit (6) of the processing device (4) has a kernel that simulates four matched filter masks.

3. The biometric authentication apparatus (1) according to any preceding Claim, wherein the image capturing device (3) captures images of a hand, especially images of a palm, either in both, either in only one of the visible light or near infrared light spectrums.

4. A biometric authentication method of detecting biometric characteristic data and performing individual authentication, comprising steps of:

a) capturing image of a hand, especially image of a palm, in an image capturing device (3),

b) blurring of captured image by means of a digital blur filter (11),

c) sparse matched filtering of blurred image *using only a single combined spare matched filtering kernel to acquire sparse matched filtering valuers* performed in sparse matched filtering unit (6)

d) Halo artifact removing performed in Halo artefact removal unit (7),

e) assigning of an angle to each filtered pixel value for acquiring a four vector values in each pixel,

f) summing of the four vector values in each pixel for acquiring a cumulative vector value in each pixel,

g) generating set of vectors of the captured image by generating the most significant vectors,

h) comparing said set of vectors of the captured image to a set of vectors stored in a data storage device (5),

i) verifying said comparison results.

5. The biometric authentication method according to Claim 4, wherein the step b) blurring of captured image is performed before step a) capturing the image, wherein blurring of the scene is performed by means of the blurring lens (10) before the scene is captured by an image capturing device (3), instead of the digital blur filter (11).

6. The biometric authentication method according to Claim 4, wherein steps e), f) and g) is performed by means of vector obtaining unit (8).

7. The biometric authentication method according to Claim 4, wherein steps h) and i) is performed by means of registration processing unit (9).

**Patentansprüche**

1. Ein biometrisches Authentifizierungsgerät, das biometrische Kenndaten einer Hand ermittelt und individuelle Authentifizierung durchführt, bestehend aus:

- einer Bilderfassungsvorrichtung (3), die Bilder eines Armes, insbesondere einer Hand, erfasst,

- einer Bilderverwischungsvorrichtung, die, je nach Ausführungsform, besteht nur aus:

-- entweder einem digitalen Verwischungsfilter (11), der das von der Bilderfassungsvorrichtung (3) erfasste Bild verwischt, bevor es die dünnbesetzte passende Filterungseinheit (6) erreicht,

-- entweder einer Verwischungslinse (10) für optisches Verwischen des Motivs, bevor es von der Bilderfassungsvorrichtung (3) erfasst ist, bevor es die dünnbesetzte passende Filterungseinheit (6) erreicht,

- einer Verarbeitungseinheit (4) für die Verarbeitung jedes erfassten Bildes. Die Verarbeitungseinheit besteht aus:

-- einer dünnbesetzten passenden Filterungseinheit (6), die das dünnbesetzte passende Filtern des Bildes, indem es vier passende Filter mit nur einem einzigen kombinierten dünnbesetzten passenden Kernel simuliert, durchführt; es erzielt dünnbesetzte passende Filterungswerte für jedes Pixel,
-- einer Halo-Artefakt-Beseitigungseinheit (7), die das Halo-Artefakt beseitigt, indem jegliche dünnbesetzte passende negative Filterungswerte, die aus dem vorigen Schritt erworben werden, auf Null eingestellt werden,
-- einer vektorerfassenden Einheit (8), die einen Winkel für jeden einzelnen der vier gefilterten Pixelwerte zuordnet, damit komplexe Antworten erzielt werden, die zusammengerechnet werden, um einen kumulativen Vektorwert für jedes Pixel zu bekommen. Die vektorerfassende Einheit (8) umfasst ein NxM-Raster, das das erfasste Bild in fastgesetzten Zellen aufteilt, um den bedeutsamsten Vektor oder die bedeutsamsten Vektoren jeder Zelle zu generieren und somit einen Vektorsatz zu gewinnen,
-- einer Registrierungs-Verarbeitungs-Einheit (9), die die erfassten Vektorsätze mit einem oder mehreren Vektorsätzen, die im Speicherwerk gespeichert sind, vergleicht, somit wird ein Vektorsatz des erfassten Bildes generiert, das mit Vektorsätzen, die auf das Speicherwerk (5) gespeichert sind, verglichen werden kann,

- Speicherwerk (5), das mehrere Sätze der Vektoren speichert, die biometrische Kenndaten eines Armes, insbesondere einer Hand (2) charakterisieren.

2. Das biometrische Authentifizierungsgerät (1) gemäß Anspruch 1, wo die dünnbesetzte passende Filterungseinheit (6) der Verarbeitungseinheit (4) einen Kernel umfasst, der vier passende Filtermasken simuliert.

3. Das biometrische Authentifizierungsgerät (1) gemäß Anspruch 4, wo die Bilderfassungsvorrichtung (3) Bilder eines Armes, insbesondere einer Hand, in sichtbares Licht- und Nahinfrarotlichtspektrum, oder nur in einem der beiden Spektren erfasst.

4. Ein biometrisches Authentifizierungsverfahren für die Ermittlung biometrischer Kenndaten und für individuelle Authentifizierung, bestehend aus folgenden Schritten:

a) das Erfassen eines Bildes des Armes, insbesondere einer Hand, mit einer Bilderfassungsvorrichtung (3),
b) das Verwischen der erfassten Bildes mit einem digitalen Verwischungsfilter (11),
c) das dünnbesetzte passende Filtern eines verwischten Bildes mit nur einem einzigen kombinierten dünnbesetzten passenden Kernel, um dünnbesetzte passende Filterungswerte zu gewinnen, die in einem dünnbesetzten passenden Filtereinheit (6) durchgeführt wird,
d) Beseitigung des Halo-Artefakts mit einer Halo-Artefakt-Beseitigungseinheit (7),
e) Zuteilung von einem Winkel für jeden gefilterten Pixelwert, um vier Vektorwerte für jedes Pixel zu gewinnen,
f) Summieren der vier Vektorwerte für jedes Pixel des verarbeiteten Bildes, um einen kumulativen Vektorwert für jedes Pixel zu bekommen,
g) Generierung der Vektorsätze des erfassten Bildes, indem die bedeutsamsten Vektoren generiert werden,
h) Vergleichung der Vektorsätze des erfassten Bildes mit Vektorsätzen, die auf das Speicherwerk (5) gespeichert sind,
i) Prüfen der Vergleichsergebnisse.

5. Das biometrische Authentifizierungsverfahren (1) gemäß Anspruch 4, wo der Schritt b) das Verwischen des erfassten Bildes vor Schritt a) das Erfassten eines Bildes durchgeführt wird, und das Verwischen des Motivs wird mit einer Verwischungslinse (10) durchgeführt, bevor es von der Bilderfassungsvorrichtung (3) erfasst ist, anstelle des digitalen Verwischungsfilters (11).

6. Das biometrische Authentifizierungsverfahren (1) gemäß Anspruch 4, wo die Schritte e), f) und g) mit einer vektorerfassenden Einheit (8) durchgeführt werden.

7. Das biometrische Authentifizierungsverfahren (1) gemäß Anspruch 4, wo die Schritte h) und i) mit einer Registrierungs-Verarbeitungs-Einheit (9) durchgeführt werden.

**Revendications**

1.  Le dispositif d'authentification biométrique qui détecte les données caractéristiques biométriques de la paume et effectue l'authentification individuelle, se compose de:

    - une unité de capture de l'image (3) qui capture l'images de la main, surtout l'image de la paume,
    - un dispositif de flou d'image qui, selon le mode de réalisation, consiste en un seul

        - soit un filtre flou numérique (11) qui floue l'image capturée par l'unité de capture de l'image (3) avant que l'image atteigne l'unité de filtrage adaptée clairsemée (6),
        - soit un objectif à flou (10) pour le flou optique du cadre, avant qu'il soit capturé par l'unité de capture de l'image (3) avant que l'image atteigne l'unité de filtrage adaptée clairsemée (6),

    - une unité de traitement (4) pour chaque image capturée comprend:

        - une unité de filtrage adaptée clairsemée (6) qui effectue le filtrage adaptée clairsemée de l'image par simulation de quatre filtres adaptés en utilisant seulement un seul un noyau combiné du filtre adaptée clairsemée, suite de quoi les valeurs du filtrage adapté clairsemé sont obtenus pour chaque pixel,
        - une unité suppression d'artefact Halo (7) qui met à zéro toute valeur négative du filtrage adapté clairsemé, acquise à l'étape précédente,
        - une unité d'obtention de vecteur (8) attribuant les angles à chacune des quatre valeurs, acquises dans chaque pixel filtré afin d'obtenir quatre réponses dans chaque pixel où les quatre valeurs complexes sont additionnées pour acquérir une valeur de vecteur cumulée pour chaque pixel, dans lequel l'unité d'obtention de vecteur (8) comprend la grille NxM qui divise l'image capturée en cellules prédéterminées pour générer de chaque cellule le vecteur le plus important ou bien plusieurs vecteurs et acquérir un ensemble de vecteurs,
        - une unité d'enregistrement de traitement (9) qui compare l'ensemble obtenu de vecteurs avec l'ensemble des vecteurs stockés dans l'unité de stockage de données (5),

        En résultat, l'ensemble des vecteurs pour l'image capturée est généré et peut être mis en correspondance avec l'ensemble des vecteurs stockés dans l'unité de stockage de données (5),
        - une unité de stockage de données (5) qui stocke plusieurs ensembles de vecteurs caractérisent les données caractéristiques biométriques de la main, en particulier de la paume (2).

2.  Le dispositif d'authentification biométrique (1) selon la revendication 1, où l'unité de filtrage adapté clairsemé (6) de l'unité de traitement (4) a un noyau qui simule quatre masques du filtre adapté.

3.  Le dispositif d'authentification biométrique (1) selon toute revendication précédente où l'unité de capture de l'image (3) capture les images de la main, en particulier celles de la paume, soit dans un seul ou deux spectres visibles de lumière ou proche du spectre de la lumière infrarouge.

4.  La méthode d'authentification biométrique de détecter des données caractéristiques biométriques et l'authentification individuelle, comprend les étapes suivantes:

    a) la capture de l'image de la main, en particulier l'image de la paume par une unité de capture de l'image (3),
    b) le flou de l'image capturée par un filtre flou numérique (11),
    c) le filtrage adaptée clairsemée de l'image floue en utilisant seulement un seul un noyau combiné du filtre adaptée clairsemée pour acquérir des valeurs de filtrage adapté clairsemé effectué par une unité de filtrage adapté clairsemé (6),
    d) la suppression d'artefact Halo effectuée par une unité d'élimination d'artefact Halo (7),
    e) l'attribution d'un angle à chaque valeur filtré du pixel pour acquérir quatre valeurs de vecteur dans chaque pixel,
    f) l'addition des quatre valeurs de vecteur dans chaque pixel pour acquérir une valeur cumulée dans chaque pixel,
    g) générer l'ensemble des vecteurs de l'image capturée en générant les vecteurs les plus importants,
    h) la comparaison de l'ensemble de vecteurs de l'image capturée avec l'ensemble de vecteurs stockés dans une unité de stockage de données (5),
    i) la vérification des résultats de la comparaison mentionnée.

5.  La méthode d'authentification biométrique selon la revendication 4 où l'étape b) le flou de l'image capturée est effectuée avant l'étape a) la capture de l'image, où le flou du cadre est réalise par l'objectif à flou (10) avant que le cadre est capturé par l'unité de capture de l'image (3), à la place du filtre flou numérique (11).

6. La méthode d'authentification biométrique selon la revendication 4 où, les étapes e), f) et g) sont effectuées par l'unité de l'obtention de vecteur (8).

7. La méthode d'authentification biométrique selon la définition de l'invention 4 où les étapes h) et i) sont effectuées par l'unité d'enregistrement de traitement (9).

Fig. 1

2

Biometric authentication apparatus 1

Processing device 4

Image capturing device — 3

Digital blur filter — 11

Sparse matched filtering unit — 6

7

9

Halo artifact removal unit

Registration processing unit

5

Data storage device

Vector obtaining unit

8

Fig. 2

START

I

Optical blurring of an image

Capturing of a blurred image

II

Capturing of an image

Blurring of captured image

Sparse matched filtering of blurred image

Removing of Halo artifacts

Assigning of an angle to the each filtered pixel value for acquiring vector value. Result: vector values.

Summing of vector values in each pixel. Result: cumulative vector values.

Decreasing of angle of cumulative vector value by half.

Generating a set of vectors of the captured image

Comparing a set of vectors of the captured image to a set of vectors stored in data storage device

Verifying said comparison results

Accept

Reject

Enter

Stop

Fig. 3

Fig. X 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1835443 A
- US 8000503 B
- US 20120026354 A1

**Non-patent literature cited in the description**

- **CHAUDHURI, S. ; CHATTERJEE, S. ; KATZ, N. ; NELSON, M. ; GOLDBAUM, M.** Detection of blood vessels in retinal images using two-dimensional matched filters. *Medical Imaging, IEEE Transactions,* September 1989, vol. 8 (3), 263-269

- **M. PUDZS ; M. GREITANS ; R. FUKSIS.** Complex 2D Matched Filtering Without Halo Artifacts. *International Conference on Systems, Signals and Image Processing, IWSSIP 2011, Sarajevo, Bosnia and Herzegovina,* 16 June 2011, 109-112